# EUROPÄISCHE PATENTSCHRIFT

(11) **EP 0 593 791 B1**
(45) Veröffentlichungstag und Bekanntmachung des Hinweises auf die Patenterteilung: **14.05.1997**
(21) Anmeldenummer: 92117414.0
(22) Anmeldetag: 12.10.1992
(51) Int. Cl.: A61G 15/14, F16M 11/04

(54) **Vorrichtung zum Verstellen eines zahnärztlichen Gerätes**
Device for displacing a dental apparatus
Dispositif pour déplacer un appareil dentaire

(43) Veröffentlichungstag der Anmeldung: 27.04.1994
(73) Patentinhaber: SIEMENS AKTIENGESELLSCHAFT, 80333 München (DE)
(72) Erfinder: Lehmann, Karl-Heinz, Dipl.-Ing. (FH), W-6148 Heppenheim (DE); Moritz, Günther, W-6840 Lampertheim (DE)

(56) Entgegenhaltungen:
- DE-A- 2 060 278
- DE-A- 2 109 751

## Beschreibung

Die Erfindung bezieht sich auf eine Vorrichtung zur Verstellung eines zahnärztlichen Gerätes relativ zu einem Patientenstuhl unter Verwendung eines in der Grundstellung im wesentlichen aufrechtstehenden Parallelogrammtragarmes, der bodenseitig an einem Basisteil derart angelenkt ist, daß er einerseits um eine lotrechte Achse schwenkbar und andererseits um die Parallelogramm-Gelenkachsen neigbar ist.

Eine solche Vorrichtung ist beispielsweise aus der DE-20 60 278 bekannt. Der Parallelogrammtragarm dient dort als Träger für eine Speifontäne und eine Instrumentenhalterung. Das Schwenken um die lotrechte Achse erfolgt bei diesem Gerät dadurch, daß das bodenseitige Ende des Parallelogrammtragarmes an einem Ausleger befestigt ist, der wiederum um eine vertikale Achse an einem benachbarten Geräteständer geschwenkt werden kann.

Nachteilig bei einer solchen Anordnung ist, daß zum Schwenken relativ viel Platz benötigt wird, denn der Drehpunkt liegt unterhalb des Ständers also innerhalb dessen Grundrisses. Weiterhin ist es nachteilig, daß sich infolge des Auslegers beim Verschwenken der Speifontäne unterschiedliche Abstände zum Patientenstuhl ergeben. Schließlich ist mit dieser Anordnung keine Längsverschiebbarkeit der Speifontäne in bezug auf den Patientenstuhl gegeben.

In der DE-A-21 09 751 ist eine Rückwärts-Kopfwaschanlage, wie man sie in Friseursalons zur Halterung der Waschbecken einsetzt, beschrieben. Die Halterung enthält einen unteren, am Boden gelagerten, um eine senkrechte Achse drehbaren unteren Schwenkarm und einen sich daran anschließenden oberen Schwenkarm, an dessen freiem Ende das Waschbecken um eine senkrechte Achse drehbar gehaltert ist. Beide Schwenkarme sind als Gelenkparallelogrammarme ausgebildet, wobei der untere Schwenkarm im wesentlichen aufrechtstehend und der obere Schwenkarm im wesentlichen waagerechtliegend angeordnet sind. Der untere Schwenkarm ist mittels eines waagerecht angeordneten Lenkers drehbar an einem am Boden befestigten Tragzapfen angeschlossen, wobei der Tragzapfen im wesentlichen zentrisch innerhalb der Umrisse der bodenseitigen Gelenkachsen des unteren Schwenkarmes angeordnet ist.

Der im Anspruch 1 angegebenen Erfindung liegt die Aufgabe zugrunde, eine Vorrichtung der eingangs genannten Art anzugeben, mit der die genannten Nachteile vermieden werden können. Die Vorrichtung soll gleichermaßen auf der linken Seite eines Patientenstuhles zur Verstellung eines Helferinnengerätes als auch auf der rechten Seite eines Stuhles zur Verstellung eines Arztgerätes eingesetzt und die Haltekraft und damit die Höhenlage des Parallelogrammtragarmes auf einfache Weise eingestellt werden.

Gemäß einer vorteilhaften Ausgestaltung der Erfindung enthält der Parallelogrammtragarm zwei Schwenklager, ein bodenseitiges, um das der Parallelogrammtragarm gegenüber dem Basisteil schwenkbar ist, und am anderen Ende des Parallelogrammtragarmes ein weiteres Schwenklager, um das das Gerät gegenüber dem Parallelogrammtragarm schwenkbar ist. Dadurch ist eine Drehbarkeit in zwei Ebenen gegeben, die in Verbindung mit der Neigbarkeit des Parallelogrammtragarmes eine dreidimensionale Bewegung und damit Verstellung des Gerätes in einem sehr weiten Winkelbereich ermöglicht. Die erfindungsgemäße Anordnung erlaubt außerdem, problemlos eine horizontale Verschiebbarkeit des gesamten Gerätes gegenüber dem Patientenstuhl vorzusehen, mit der Folge, daß die Beweglichkeit des Gerätes, sei es Arztgerät oder Helferinnengerät, optimal an die Behandlungssituation angepaßt werden kann.

Weitere Vorteile ergeben sich aus der nachfolgenden Beschreibung eines Ausführungsbeispieles.

Es zeigen:
Figur 1 eine Prinzipdarstellung eines möglichen Anwendungsfalles des erfindungsgemäßen Parallelogrammtragarmes,
Figur 2 die äußeren Verkleidungsteile des erfindungsgemäßen Tragarmes,
Figuren 3A, 3B, 3C Einzelteile des erfindungsgemäßen Tragarmes in einer Explosionsdarstellung.

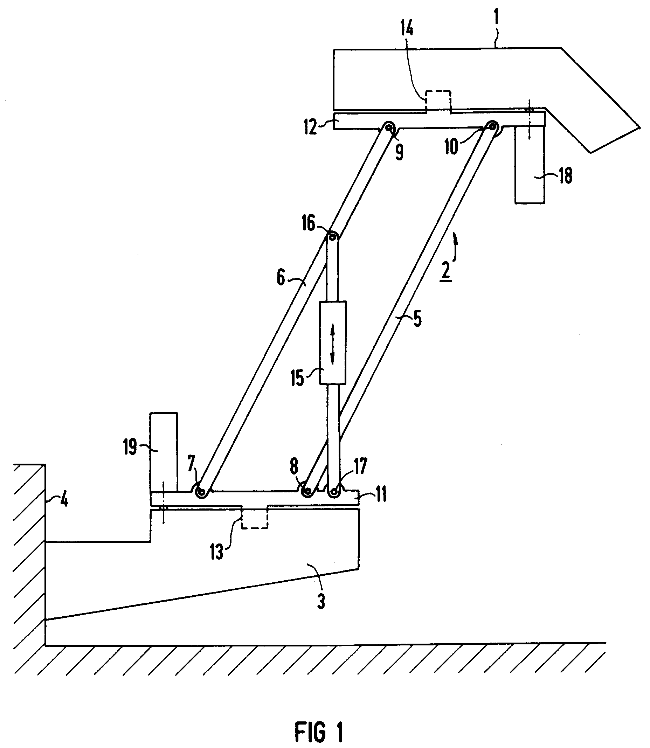

Die Figur 1 zeigt in einer schematischen Darstellung ein zahnärztliches, allgemein mit 1 bezeichnetes Gerät, welches mittels eines Parallelogrammtragarmes 2 an einem bodenseitigen Basisteil 3 schwenkbar und drehbar gehaltert ist. Das Basisteil 3 kann mit Vorteil an einem zahnärztlichen, mit der Position 4 angedeuteten Patientenstuhl angeflanscht sein. Die beiden Parallelogrammarme 5 und 6 sind über Gelenke 7, 8 und 9, 10 mit nachfolgend noch näher beschriebenen Anschlußteilen 11 und 12 verbunden. Das untere Anschlußteil 11 ist mittels einer vertikalen Achslagerung 13 schwenkbar am Basisteil 3 gelagert, während das Gerät 1 mittels einer weiteren vertikalen Achslagerung 14 schwenkbar am oberen Anschlußteil 12 gelagert ist. Zwischen den beiden Parallelogrammarmen 5 und 6 ist eine motorisch antreibbare Hubmechanik 15 vorgesehen, die über Gelenke 16, 17 einerseits am Tragarm 6 und andererseits an einer außerhalb der Umrisse der (vier) Gelenkpunkte 7, 8 (7', 8') gelegenen Stelle des Anschlußteiles 11 angelenkt ist. Die außerhalb der Gelenkpunkte angeordnete Anlenkung des Antriebs hat den Vorteil, daß sowohl die Baugröße als auch die vorzusehende Federkraft der Druckfeder minimiert werden kann. Die Antriebe für das Verschwenken des Gerätes sowie des gesamten Parallelogrammtragarmes um die vertikalen Achsen 13 und 14 sind mit 18 und 19 bezeichnet.

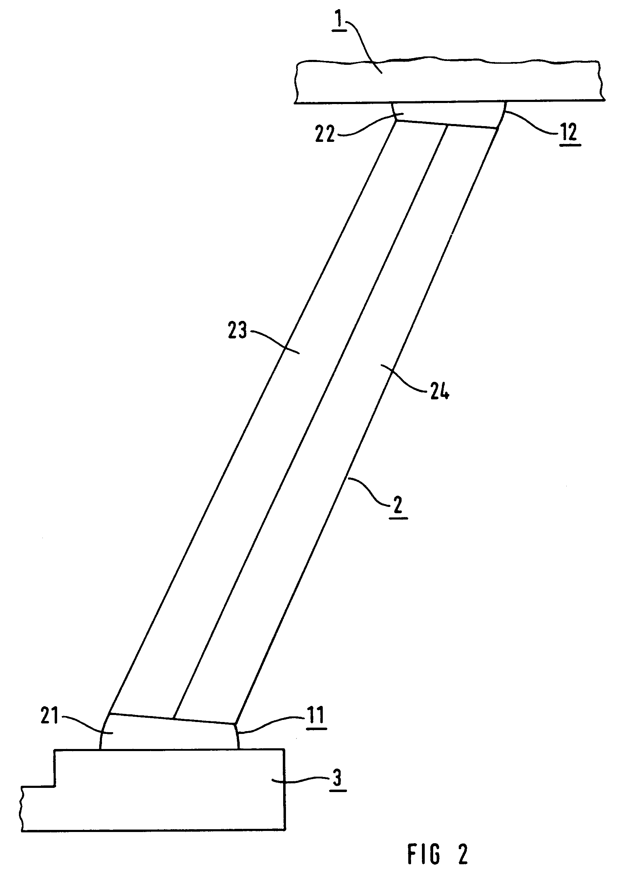

Die Figur 2 zeigt den äußeren Aufbau des Parallelogrammtragarmes 2. Die beiden Anschlußteile 11 und 12 weisen kugelkalottenförmige Gehäuse 21 und 22 auf, denen angepaßt aus zwei Halbschalen 23 und 24 gebildete rohrförmige, nach oben leicht konisch zulaufende Verkleidungsteile sind. Die beiden kalottenförmigen Gehäuseteile 21, 22 umschließen sowohl die Gelenke des Parallelogrammtragarmes als auch die beiden Drehlager.

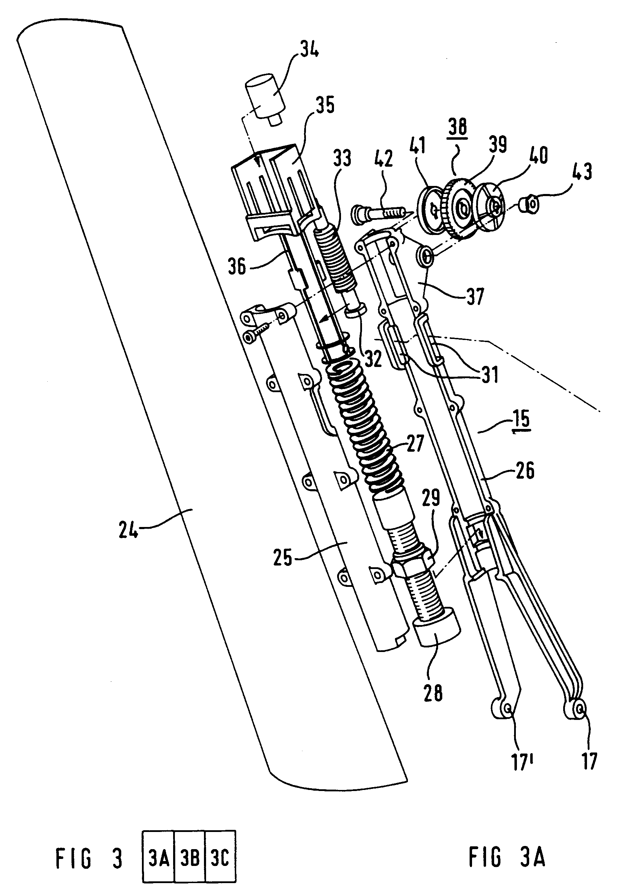

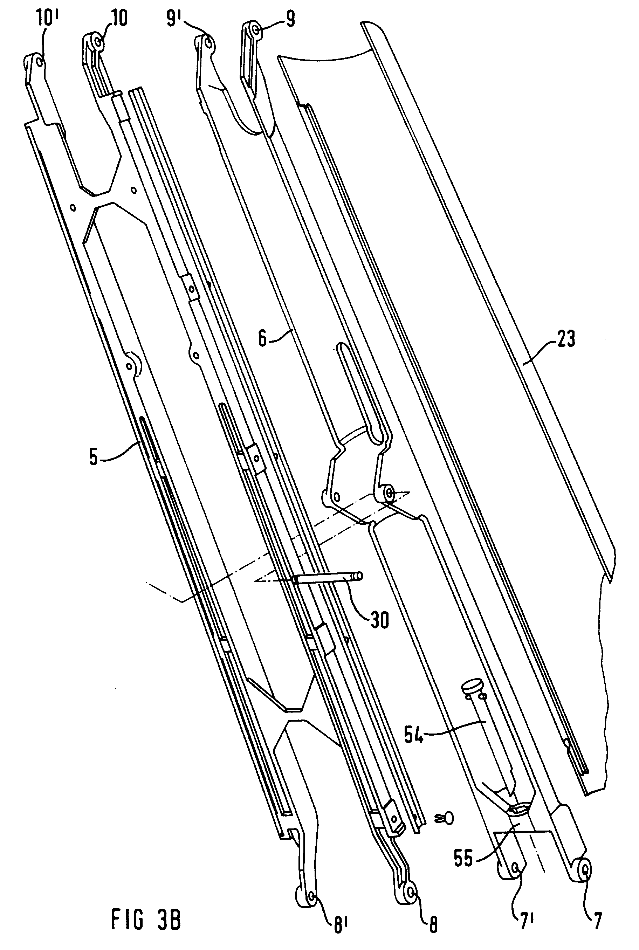

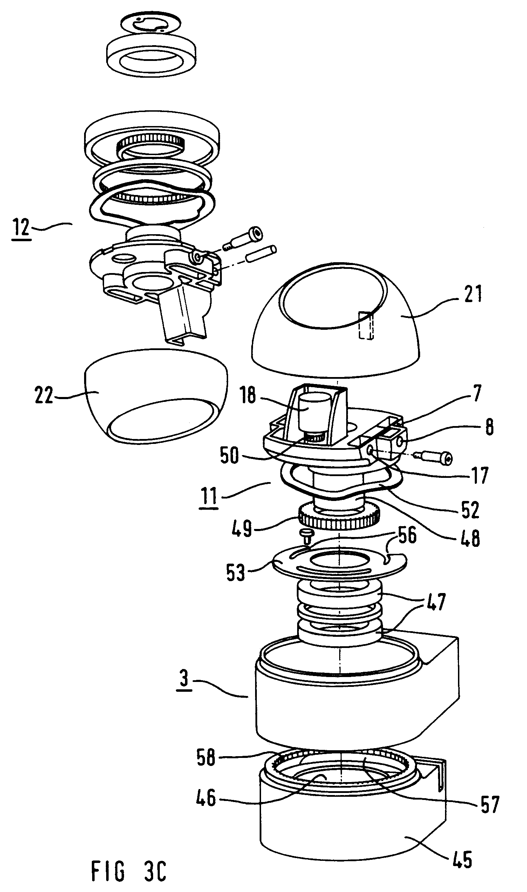

Die Figur 3 zeigt in den Abschnitten 3A, 3B, 3C den Innenaufbau des Parallelogrammtragarmes mit den beiden Anschlußteilen in einer Explosionsdarstellung.

Die Figur 3A läßt den Aufbau des Hubmechanismuses 15 erkennen.

Mit 25 und 26 sind zwei Federarmhälften bezeichnet, die im montierten Zustand einen zylindrischen Raum bilden, in dem eine Druckfeder 27 geführt ist. Das eine Ende der Druckfeder liegt über ein nicht näher bezeichnetes Zwischenstück an einer Stellschraube 28 an, deren mit ihr korrespondierende Mutter 29 in einer entsprechend ausgebildeten Ausnehmung der Gehäusehälfte 26 verdrehsicher gehaltert ist. Das andere Ende der Druckfeder 27 liegt an einem Widerlager in Form eines Querbolzens 30 (Fig. 3B) an, der, wie aus der strichpunktierten Linienführung ersichtlich, in der Zugstange 6 gelagert ist und im montierten Zustand durch zwei an der rechten Federarmhälfte 26 angeformte Längsführungen 31 hindurchgreift. An dem Widerlager 30 liegt der Stempel 32 einer Schnecke 33 an, die von einem Elektromotor 34 angetrieben wird. Schnecke 33 und Antriebsmotor 34 sind in einem kastenförmigen Gehäuse 35, der mit einer Längsführung 36 versehen ist, gehaltert.

Die Längsführung 31 dient gleichzeitig als Anschlag zur Begrenzung der Hubbewegung, was den Vorteil erbringt, daß die Kräfte in den Endlagen minimiert werden. Die Lagerstellen an den Anlenkpunkten 7 und 8 bzw. 7' bzw. 8' der Tragarme 5 und 6 werden dadurch weitgehend entlastet.

Im oberen Teil der rechten Federarmhälfte 26 ist eine Gehäuseausbuchtung 37 vorgesehen, in der ein Reibradgesperre 38 gelagert ist. Das Gesperre 38 wird gebildet aus einem Schneckenrad 39, welches im montierten Zustand mit der Schnecke 33 in Eingriff steht und zwei beidseitig mit Reibkraft anliegenden Scheiben 40 und 41. Die Reibkraft wird durch Verspannen der Scheiben mittels eines Lagerbolzens 42 und einer Spannmutter 43 erreicht. Das Schneckenrad 39 ist auf dem Lagerbolzen 42 an sich frei drehbar aufgesetzt; durch die beiden Scheiben 40 und 41, die mit einer definierten Anpreßkraft gegen die seitlichen Flächen des Schneckenrades drücken, wird es jedoch mit einer definierten Haltekraft festgehalten. Die Haltekraft ist dabei so bemessen, daß sich das Schneckenrad bei einer motorischen Verstellung der Schnecke nicht drehen kann, was zur Folge hat, daß sich das gesamte Antriebssystem, bestehend aus Motor 34, Schnecke 33 sowie Gehäuse 35 und Führung 36 in Achsrichtung bewegen kann. Je nach Drehrichtung des Motors 34 kann somit die Druckfeder 27 gespannt oder entspannt werden, wodurch sich die Haltekraft und damit die Höhenlage des Parallelogrammtragarmes verstellen läßt. Die Reibkraft, die auf das Schneckenrad 39 wirkt, ist so bemessen, daß eine Verstellung des Parallelogrammtragarmes sowohl von Hand als auch motorisch möglich ist. Im Falle einer Verstellung von Hand wird bei einem Neigen des Parallelogrammtragarmes das Schneckenrad 39 gedreht, wodurch sich dessen Verzahnung auf der (nicht drehenden und daher feststehenden) Schnecke abwälzen kann.

Die Figur 3C läßt den Aufbau der boden- und geräteseitigen Anschlußteile des Parallelogrammtragarmes erkennen.

Das Basisteil 3 enthält ein Gehäuseteil 45 mit einer zentralen Innenbohrung 46, in die Lager 47 zur drehbaren Lagerung eines Zapfens 48 eingesetzt sind. Der Zapfen 48 ist integraler Bestandteil des Anschlußteils 11, der, wie durch die Bezugshinweise ersichtlich, entsprechende Lager einerseits für die Gelenke 7 und 8 bzw. 7a, 8a und andererseits für die Anlenkung der Federgehäusehälfte 26 enthält. Auf dem Zapfen 48 ist lose, d.h. an sich frei drehbar, ein Zahnrad 49 aufgeschoben, welches im montierten Zustand mit einem Ritzel 50 des Antriebsmotors 18 in Eingriff steht. Die freie Drehbarkeit des Zahnrades 49 ist jedoch durch eine definierte Reibkraft eingeschränkt, welche durch Verspannen einer federnden Wellscheibe 52 erzielt wird. Die Reibkraft, die auf das Zahnrad 49 wirkt, ist - ähnlich wie bei dem Reibradgesperre 38 der Hubmechanik 15 - so eingestellt, daß bei einer motorischen Verstellung über den Antrieb 18 sich das Ritzel 50 an der Verzahnung 49 abwälzen kann, wodurch das Anschlußteil 11 gegenüber dem Gehäuse 45 gedreht wird. Bei Verstellung von Hand dagegen wird die Reibkraft überwunden, wodurch sich das Anschlußteil 11 mit dem Zapfen 48 gegenüber dem feststehenden Zahnrad 49 drehen läßt.

Das obere Anschlußteil 12 ist baugleich aufgebaut, so daß davon abgesehen wird, diese Teile zu bezeichnen und zu beschreiben.

Zwischen dem Zahnrad 49 und den Lagern 47 befindet sich eine Steuerscheibe 53, die mit einem Anschlagstift 54 zusammenwirkt, der in einer Buchse 55 des Zugstabes 6 geführt ist. Der Anschlagstift 54 begrenzt die Drehbarkeit des Parallelogrammtragarmes gegenüber dem Basisteil 3, und zwar in Abhängigkeit von der Höheneinstellung des Tragarmes. Hierzu enthält die Steuerscheibe 53 eine Steuerkurve 56, auf deren Bahn sich der Anschlagstift 54 in den Endlagen bei einer Höhenverstellung bewegt.

Die Steuerkurve 56 umschreibt in Verbindung mit einer Aussparung 57 im Gehäuse 45 des Basisteils 3 eine Hüllkurve, in deren durch die Steuerscheibe verstellbaren Grenzen sich der Tragarm bewegen läßt.

Das Gehäuseteil 45 enthält am Umfang eine Verzahnung 58, die mit einem nicht dargestellten Positionsmelder zusammenwirkt, mit dem der Drehwinkel zwischen Anschlußteil 11 und Basisteil 3 gemessen und als elektrischer Meßwert an eine Regelelektronik weitergegeben werden kann.

Die Wegerfassung, die für die Drehbewegung und für die Hubbewegung erfolgt, ermöglicht eine Programmierung des Tragarmsystems in verschiedenen Positionen. Dies kann analog auch zu einer der Lagerungspositionen des Patientenstuhles erfolgen. Damit könnten bestimmten Programmstellungen des Tragarmes bestimmte Programmstellungen des Patientenstuhles zugeordnet werden, welche beispielsweise durch eine gemeinsame Tastfunktion ausgelöst werden könnten.

Die beschriebene Tragarmkonstruktion ermöglicht mit Vorteil, die zu tragenden Geräte - z.B. Arzt- und Helferingerät - als eigenständige Einheiten auszubilden. Insbesondere durch die beiden, in vorteilhafter Weise angeordneten Drehlager läßt sich eine optimale Anpassung an die unterschiedlichen Behandlungspositionen erzielen, wobei es möglich ist, das Gerät in jeder Neigungslage des Tragarmes auf gleichen Abstand zum Patientenstuhl zu halten.

## Patentansprüche

1. Vorrichtung zur Verstellung eines zahnärztlichen Gerätes (1) in Relation zu einem Patientenstuhl (4) unter Verwendung eines an sich bekannten, in der Grundstellung im wesentlichen aufrechtstehenden Parallelogrammtragarmes (2), welcher bodenseitig an einem Basisteil (3) derart angelenkt ist, daß er einerseits um eine lotrechte Achse (13) schwenkbar und andererseits um einen Parallelogrammgelenkachsen (7, 7', 8, 8') neigbar ist, wobei die Lagerung (47, 48) mit der lotrechten Schwenkachse (13) im wesentlichen zentrisch innerhalb der Umrisse der bodenseitigen Gelenkachsen (7, 7', 8, 8') in einem Anschlußteil (11) angeordnet ist, **dadurch gekennzeichnet,** daß ein Parallelogrammtragarm mit Federgewichtsausgleich vorgesehen ist, bei dem auf die Feder (27) ein motorisch angetriebenes Stellmittel (33 bis 36) einwirkt.

2. Vorrichtung nach Anspruch 1, bei der das Stellmittel (33 bis 36) mit einer Verzahnung versehen ist, die mit der Verzahnung eines kraftabhängig lösbaren Gesperres (38) in Eingriff steht.

3. Vorrichtung nach Anspruch 2, bei der ein durch Reibung kraftschlüssig arbeitendes Gesperre (38) vorhanden ist, wobei Reibkraft und Antriebsmoment so bemessen sind, daß der Parallelogrammtragarm sowohl motorisch als auch von Hand verstellbar ist.

4. Vorrichtung nach Anspruch 3, bei der in einem Führungsgehäuse (25, 27) eine Druckfeder (27) angeordnet ist, deren eines Ende sich an dem Gehäuse zugeordneten Stellmitteln (28, 29) abstützt und deren anderes Ende an einem im einen Parallelogrammtragarm angeordneten und im Führungsgehäuse (25, 26) geführten Widerlager (30) anliegt, bei dem weiterhin im Führungsgehäuse ein mit einer Rutschkupplung (40, 41) gekuppeltes Schneckenrad (39) drehbar gelagert ist, welches mit einer mit dem Antrieb (34) verbundenen Schnecke (33) in Eingriff steht.

5. Vorrichtung nach Anspruch 3, bei der die Druckfeder (27) an im Führungsgehäuse (25, 26) lageveränderbar angeordneten Stellmitteln (28, 29) anliegt.

6. Vorrichtung nach Anspruch 4, bei der die Rutschkupplung durch seitlich an den Flächen des Schneckenrades (39) anliegende, deren Drehbarkeit hemmende Scheiben (40,41) gebildet ist.

7. Vorrichtung nach Anspruch 4, bei der das Führungsgehäuse (25, 26) aus zwei durch Längsteilung gebildeten Hälften besteht.

8. Vorrichtung nach einem der Ansprüche 1 bis 7, bei der der Hub und der Drehwinkel des Parallelogrammtragarmes durch Anschlagmittel (54 bis 56) begrenzt sind.

9. Vorrichtung nach Anspruch 1, bei der das Gerät (1) mittels einer weiteren vertikalen Achslagerung (14) an einem weiteren Anschlußteil (12) schwenkbar gelagert ist, welches am anderen Ende des Parallelogrammarmes (2) angeordnet ist.

10. Vorrichtung nach Anspruch 9, bei der die beiden Anschlußteile (11, 12) ein kugelkalottenförmiges Gehäuse (21, 22) aufweisen, denen ein dazu passendes rohrförmiges, die Tragarmkonstruktion verkleidendes Gehäuse (23, 24) zugeordnet ist.

11. Vorrichtung nach Anspruch 10, bei der das Verkleidungsgehäuse (23, 24) aus zwei durch Längsteilung gebildeten Hälften besteht.

12. Vorrichtung nach Anspruch 11, bei der die Hälften (23, 24) konisch geformte Halbschalen sind.

13. Vorrichtung nach Anspruch 2, bei der die beiden Anschlußteile (11,12) steuerbare Antriebe (18,19) enthalten.

14. Vorrichtung nach Anspruch 9, bei der die beiden Anschlußteile (11, 12) einen Zapfen (48) aufweisen, welcher mittels Lager (47) im Basisteil (3) bzw. im Gerät (1) gelagert sind, und bei der auf den Zapfen (48) durch Reibkraft gebremste Zahnräder drehbar aufgesetzt sind, welche mit den Antriebsritzeln (50) von Stellmotoren (18, 19) in Eingriff stehen.

15. Vorrichtung nach Anspruch 14, bei der eine Steuerscheibe (53) vorhanden ist, die eine Steuerkurve (56) aufweist, gegen die ein am Parallelogrammtragarm befestigter Steuerzapfen (54) aufläuft, wobei die Steuerkurve (56) so ausgelegt ist, daß damit eine Begrenzung des Schwenkwinkels des Parallelogrammtragarmes in Abhängigkeit von der Höhenverstellung erzielt wird.

16. Vorrichtung nach Anspruch 9, bei der die beiden Anschlußteile (11,12) baugleich ausgebildet sind.

17. Vorrichtung nach einem der Ansprüche 3 bis 15, bei der die Anlenkstelle (17, 17') für das Führungsgehäuse (15) außerhalb der durch die Gelenkanordnung (7, 7', 8, 8') des Parallelogrammtragarmes gegebenen Umrisse am Anschlußteil (11) angeordnet ist.

## Claims

1. Device for adjusting a dental apparatus (1) in relation to a patient chair (4), using a parallelogram support arm (2), which is known per se, is substantially upright in the starting position, and which on the base side is articulated on a base portion (3) in such a way that on the one hand it can be pivoted about a perpendicular axle (13) and on the other hand can be inclined about a parallelogram articulated axle (7, 7', 8, 8'), with the bearing (47, 48) being arranged, with the perpendicular swivel axle (13), substantially centrally inside the outlines of the base-side articulated axles (7, 7', 8, 8'), in a connection portion (11), characterised in that there is provided a parallelogram support arm having a spring counterweight, in which a motor-driven adjusting means (33 to 36) acts on the spring (27).

2. Device according to claim 1, in which the adjusting means (33 to 36) is provided with toothing, which is engaged with the toothing of a locking mechanism (38) which can be released in a force-dependent manner.

3. Device according to claim 2, in which there is a locking mechanism (38) which operates in a force-locking manner by means of friction, with frictional force and driving torque being dimensioned in such a way that the parallelogram support arm can be adjusted both by motor and by hand.

4. Device according to claim 3, in which there is arranged in a guide housing (25, 27(sic)) a compression spring (27), the one end of which is supported on adjusting means (28, 29) allocated to the housing and the' other end of which rests against an abutment (30) which is arranged in a parallelogram support arm and is guided in the guide housing (25, 26), in which case there is furthermore rotatably mounted in the guide housing a worm wheel (39) which is coupled with a sliding clutch (40, 41) and is engaged with a worm (33) which is connected to the drive (34).

5. Device according to claim 3, in which the compression spring (27) rests against adjusting means (28, 29) which are arranged in the guide housing (25, 26) in a manner such that their position can be altered.

6. Device according to claim 4, in which the sliding clutch is formed by discs (40, 41), which rest laterally against the surfaces of the worm wheel (39) and restrict its turning capacity.

7. Device according to claim 4, in which the guide housing (25, 26) consists of two halves formed by longitudinal division.

8. Device according to one of the claims 1 to 7, in which the lift and the angle of rotation of the parallelogram support arm are delimited by stopping means (54 to 56).

9. Device according to claim 1, in which by means of a further vertical axle bearing (14) the apparatus (1) is pivotably mounted on a further connection portion (12), which is arranged on the other end of the parallelogram arm (2).

10. Device according to claim 9, in which the two connection portions (11, 12) have a spherical-cup-shaped housing (21, 22), to which is allocated a tubular housing (23, 24) which fits the said housing (21, 22) and covers the support arm construction.

11. Device according to claim 10, in which the protective housing (23, 24) consists of two halves formed by longitudinal division.

12. Device according to claim 11, in which the halves (23, 24) are conical half shells.

13. Device according to claim 2, in which the two connection portions (11, 12) contain controllable drives (18, 19).

14. Device according to claim 9, in which the two connection portions (11, 12) each have a pin (48), which pins are mounted in the base portion (3) or in the apparatus (1) by means of bearings (47), and in which device there are rotatably mounted on the pins (48) toothed wheels which are braked by frictional force and are engaged with the driving pinions (50) of adjusting motors (18, 19).

15. Device according to claim 14, in which there is a cam disc (53), which has a control curve (56), against which runs a control pin (54) which is fastened to the parallelogram support arm, with the control curve (56) being designed in such a way that a delimitation of the swing of the parallelogram support arm as a function of the vertical adjustment is achieved therewith.

16. Device according to claim 9, in which the two connection portions (11, 12) are formed in a manner such that they are constructionally the same

17. Device according to one of the claims 3 to 15, in which the articulation point (17, 17') for the guide housing (15) is arranged on the connection portion (11) such that it is outside the outlines determined by the hinge arrangement (7, 7', 8, 8') of the parallelogram support arm.

## Revendications

1. Dispositif pour déplacer un appareil de dentisterie (1) par rapport à un fauteuil de patient (4) au moyen d'un bras support à parallélogramme (2), en soi connu, sensiblement vertical en la position de base, lequel est articulé du côté du sol à une base (3) de manière à pouvoir, d'une part, pivoter autour d'un axe vertical (13) et, d'autre part, s'incliner sur des axes d'articulations à parallélogramme (7, 7', 8, 8'), le palier (47, 48) ayant l'axe de pivotement vertical (13) étant disposé sensiblement au centre du périmètre des axes d'articulations (7, 7', 8, 8') du côté du sol, dans une pièce de raccordement (11), caractérisé en ce qu'il comporte un bras support à parallélogramme à compensation du poids de ressort, dans lequel un moyen de réglage (33 à 36) entraîné par moteur agit sur le ressort (27).

2. Dispositif selon la revendication 1, dans lequel le moyen de réglage (33 à 36) est pourvu d'une denture qui est en prise avec la denture d'un dispositif de blocage (38) pouvant se débloquer en fonction de la force appliquée.

3. Dispositif selon la revendication 2, dans lequel il est prévu un dispositif de blocage (38) fonctionnant par friction, la force de friction et le couple d'entraînement étant calculés de manière à pouvoir déplacer le bras support à parallélogramme aussi bien par moteur que manuellement.

4. Dispositif selon la revendication 3, dans lequel est disposé, dans un boîtier de guidage (25, 26), un ressort de pression (27) dont l'une des extrémités s'appuie sur des moyens de réglage (28, 29) associés au boîtier, et dont l'autre extrémité est appliquée à une butée (30) disposée dans l'un des bras support à parallélogramme et guidée dans le boîtier de guidage (25, 26), et dans lequel est montée folle d'autre part, dans le boîtier de guidage, une roue (39) à denture hélicoïdale couplée à un accouplement à glissement (40, 41), laquelle est en prise avec une vis sans fin (33) reliée à l'entraînement (34).

5. Dispositif selon la revendication 3, dans lequel le ressort de pression (27) est appliqué à des moyens de réglage (28, 29) disposés de manière à pouvoir changer de position dans le boîtier de guidage (25, 26).

6. Dispositif selon la revendication 4, dans lequel l'accouplement à glissement est formé par des disques (40, 41) s'appliquant latéralement aux faces de la roue (39) à denture hélicoïdale et empêchant sa rotation.

7. Dispositif selon la revendication 4, dans lequel le boîtier de guidage (25, 26) est constitué de deux moitiés formées par division longitudinale.

8. Dispositif selon l'une quelconque des revendications 1 à 7, dans lequel la course et l'angle de rotation du bras support à parallélogramme sont limités par des moyens de butée (54 à 56).

9. Dispositif selon la revendication 1, dans lequel l'appareil (1) est fixé de manière pivotante, au moyen d'un autre palier d'axe vertical (14), à une autre pièce de raccordement (12), laquelle est disposée à l'autre extrémité du bras à parallélogramme (2).

10. Dispositif selon la revendication 9, dans lequel les deux pièces de raccordement (11, 12) comportent un boîtier (21, 22) en forme de calotte sphérique, auquel est associé un boîtier (23, 24) tubulaire de forme adaptée habillant le système de bras support.

11. Dispositif selon la revendication 10, dans lequel le boîtier d'habillage (23, 24) est constitué de deux moitiés formées par division longitudinale.

12. Dispositif selon la revendication 11, dans lequel les moitiés (23, 24) sont des demi-coques en forme de cône.

13. Dispositif selon la revendication 2, dans lequel les deux pièces de raccordement (11, 12) comportent des entraînements (18, 19) pouvant être commandés.

14. Dispositif selon la revendication 9, dans lequel les deux pièces de raccordement (11, 12) comportent un tourillon (48) monté au moyen de paliers (47) dans la base (3) ou dans l'appareil (1), et dans lequel des roues dentées freinées par force de friction, qui sont en prise avec les pignons d'entraînement (50) de moteurs de commande (18, 19), sont montées de manière à pouvoir tourner sur le tourillon (48).

15. Dispositif selon la revendication 14, dans lequel est prévu un disque de commande (53) ayant une came de commande (56), contre laquelle vient une goupille de commande (54) fixée au bras support à parallélogramme, la came de commande (56) étant conçue de manière à obtenir une limitation de l'angle de pivotement en fonction du réglage en hauteur.

16. Dispositif selon la revendication 9, dans lequel les deux pièces de raccordement (11, 12) sont de construction identique.

17. Dispositif selon l'une quelconque des revendications 3 à 15, dans lequel le point d'articulation (17, 17') du boîtier de guidage (15) est placé sur la pièce de raccordement (11) en dehors du périmètre donné par les articulations (7, 7', 8, 8') du bras support à parallélogramme.
